## Europäisches Patentamt
## European Patent Office
## Office européen des brevets

(11) Publication number: **0 136 134**
**B1**

# EUROPEAN PATENT SPECIFICATION

(45) Date of publication of patent specification: **19.10.88**

(51) Int. Cl.⁴: **C 08 J 7/02, C 08 J 7/04**

(21) Application number: **84306212.6**

(22) Date of filing: **10.09.84**

(54) **Binding tape supply packaging.**

(30) Priority: **19.09.83 US 533508**
**01.03.84 US 585140**

(43) Date of publication of application:
**03.04.85 Bulletin 85/14**

(45) Publication of the grant of the patent:
**19.10.88 Bulletin 88/42**

(84) Designated Contracting States:
**CH DE FR GB IT LI SE**

(56) References cited:
**FR-A-2 398 603**
**GB-A-1 356 563**
**GB-A-1 422 364**
**US-A-3 825 463**

**The file contains technical information submitted after the application was filed and not included in this specification**

(73) Proprietor: **MINNESOTA MINING AND MANUFACTURING COMPANY**
**3M Center, P.O. Box 33427**
**St. Paul, Minnesota 55133-3427 (US)**

(72) Inventor: **Hanson, Gary R. c/o Minnesota Mining and**
**Manufacturing Company 2501 Hudson Road**
**P.O. Box 33427 St. Paul Minnesota 55133 (US)**
Inventor: **Rabuse, George R. c/o Minnesota Mining and**
**Manufacturing Company 2501 Hudson Road**
**P.O. Box 33427 St. Paul Minnesota 55133 (US)**

(74) Representative: **Baillie, Iain Cameron et al**
**c/o Ladas & Parry Isartorplatz 5**
**D-8000 München 2 (DE)**

Courier Press, Leamington Spa, England.

## Description

### Technical Field

This invention relates to an improved pressure-sensitive adhesive tape product and in one aspect to an improved package of a novel tape product packaged in discrete lengths for use in binding two or more sheets together to form a pamphlet.

### Background Art

This invention relates to an improved tape product and packaging of said tape product which product is especially adapted for use in binding sheets together, and in particular, to packages for providing predetermined lengths of tape in a pad, stack or a roll. A predetermined number of strips can be packaged in each pad, stack or roll. The strips are formed with tape segments at the ends which define tabs or handles permitting the strips to be withdrawn from the package without the fingers grasping the tape strips and contaminating the adhesive.

There are many articles which are packaged in pads or joined in series and wound in a roll and joined by perforations. Pressure-sensitive adhesive tape has always been wound in rolls and the unwinding is permitted by grasping the free end of the tape and peeling the outer convolution of tape from the adjacent convolution. Predetermined lengths of tape have been mechanically dispensed but it is not known, except for label stock or other liner supported articles, to join discrete lengths of a pressure-sensitive adhesive tape without a release liner in a roll with the pressure-sensitive adhesive strips separated from each other by a length of tape or a tape segment which is free of adhesive or has the adhesive detackified to permit one to grasp the end of the roll and peel the tape from the roll to dispense a strip of predetermined length. GB—A—1422364 describes an adhesive tape having an attached tab which is not separable and which is not attached to a backing material. US—A—3121021 describes a breathable, porous pressure-sensitive adhesive tape having a porous backing (preferably a unified inextensible non woven fibrous fabric) carrying a continuous but microporous pressure sensitive adhesive coating. The tape is non-irritating and does not cause maceration of the skin.

### Disclosure of Invention

The present invention provides a new tape product for binding loose sheets together. The tape is packaged and each package comprises a plurality of strips of predetermined length of tape. The strips are joined by tape segments which are free of adhesive or comprise a strip laminated to the tape to provide a tab or handle for dispensing the strip of tape from the package. The strip of tape comprises a short length of tape joined along a transverse perforate line to a predetermined length of tape which is joined by a preforate line to a second short length of tape. In the roll the short length of tape may be joined by a perforate line to another short length of tape or a further predetermined length of pressure-sensitive tape etc. The short length of tape between the perforations and which join the predetermined lengths of tape may have a strip of paper adhered to the adhesive coated surface of the tape. For use in binding sheets. together it is desirable that a locating notch or hole be formed in the short sections of tape to locate the predetermined lengths of tape at, at least one end. The perforations between the adjacent short lengths of tape and/or the predetermined lengths of tape provide means for readily separating the short lengths of tape from the predetermined lengths of tape after the predetermined lengths of tape have been applied.

The tape comprises a backing of nonwoven fibrous material coated on one surface with an acrylate adhesive and coated on the opposite surface with a release coating permitting the strips of tape to be stacked or to be convolutely wound and later separated without damage to the adhesive. The strip of material is perforated transversely of its length at closely spaced positions to define short lengths of tape between the predetermined lengths of tape. Small segments of paper may cover the short lengths of tape between the perforations to provide a handle at the leading end of each predetermined length of tape. This laminated area of the tape may be formed with a hole through the tape affording reception of a locating pin to locate the leading end of a predetermined length strip of tape.

### Brief Description of Drawing

The present invention will be further described and will reference the accompanying drawing wherein:

Figure 1 is a perspective view of a roll of tape strips according to the present invention;

Figure 2 is a cross sectional view taken along the line 2-2 of Figure 1;

Figure 3 is a perspective view of a length of tape from a roll showing a second embodiment of the strips of tape;

Figure 4 is a plan view of a stack of pressure sensitive adhesive strips according to the present invention;

Figure 5 is a front view of the stack of strips showing one strip lifted at one end from the stack;

Figure 6 is a perspective view of a strip of tape; and

Figure 7 is an enlarged fragmentary longitudinal sectional view through the tape strip construction of Figure 6.

### Description of the Preferred Embodiment

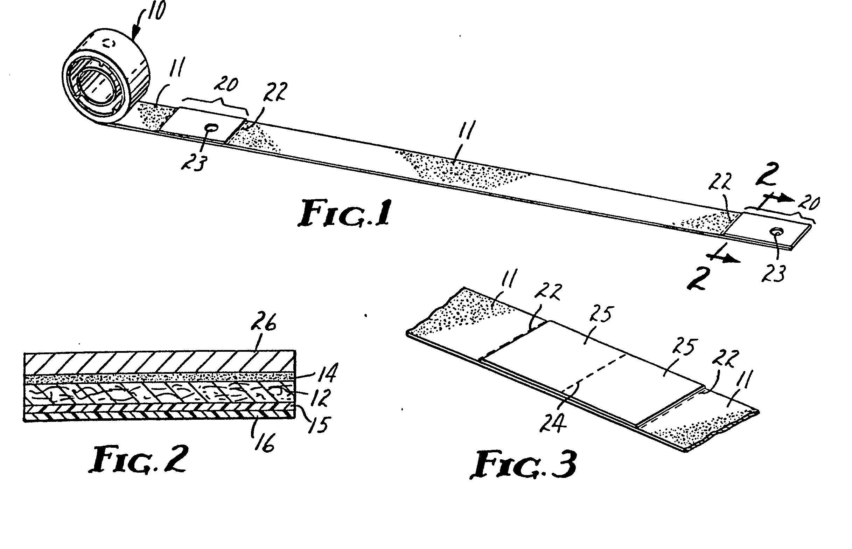

The present invention is directed to a package for predetermined lengths of a tape product for binding sheets. In the embodiments of Figures 1-3 the tape strips are wound comprising a concatenation of pressure-sensitive adhesive strips for use in binding sheets together. The successive strips are separated by intermediate strips which permit the dispensing of the strips without contamination of the adhesive on one side of the tape by the fingers grasping the tape to pull it off the roll. The contamination of the adhesive can discolor the tape leaving a finger print or smudge and/or destroy the adhesive quality of the adhesive so it will not hold as well.

The strips illustrated are adapted for use with a binding device which prepares a stack of sheets for binding by shingling or offsetting the edges of the sheets along the edge to be bound and positioning the edges on a platen. The strip of tape of the present invention is then placed over the offset edges and placed in contact with the edges. The tape strip is supple and will conform to the step-like treads and risers of the sheets.

In the drawing, like numbers refer to like parts or materials throughout.

The roll 10 of the present invention comprises a plurality of strips of tape 11 as illustrated in the drawing, each comprising a backing 12 with a coating on one surface of a pressure-sensitive adhesive 14. The backing 12 is preferably a unified nonwoven fibrous fabric carrying a continuous coating of pressure-sensitive adhesive 14. The backing 12 is also coated with a barrier coating 15 on the surface opposite the adhesive coated surface to restrict migration or viscoelastic flow of the adhesive 14 to the opposite surface of the tape. The barrier coating 15 is coated with a release coat or low-adhesion backsizing 16 to permit unwinding and separation of one strip in the roll from the other.

As shown in Figure 1 the strips of tape 11 are separated by shorter strips 20 which strips 20 are readily separated, along weakened or preferably perforated lines 22, from the strips of tape 11. The strips of tape 11 are of a predetermined length and the strips 20 define tabs or handles to permit the user to grasp a discrete length of tape 11, peel and separate it from the roll and position the tape on a receptor surface without making contact with the adhesive 14 on the strip of tape 11. When the tape strip 11 has been applied to the receptor the strip 11 is readily separated along the perforate line 22 from the roll and then the strip 20 which was used to locate the free end of the roll is separated along the perforate line 22. The strips 20 have an aligning or locating opening 23 formed in the strip to position the face end of the tape.

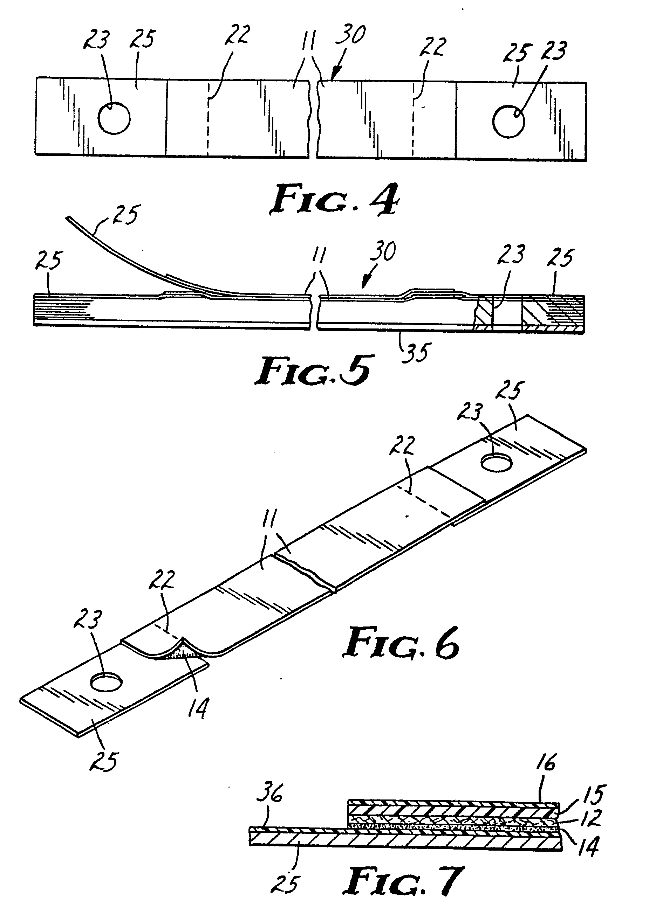

The embodiment shown in Figure 3 illustrates strips of tape 11 which are separated by a shorter length of tape to define the tabs or handles where the shorter length is also divided along a perforate line 24 to divide the tape into two sections 25. In this embodiment the strip of tape 11 may have a tab 25 at each end of the strip after it is removed from the roll. The strip of tape is removed by grasping a tab 25 and unwinding the strip 11 and is then separated from the roll by grasping the trailing tab 25 and separating the unwound strip of tape 11 and the trailing tab 25 from the roll along the perforated line 24. The tape strips are dispensed and separated from the roll without the need for a cutting member and can be placed on the receptor free of contamination by the user. The tabs are then separated readily from the applied strip.

An example of the backing 12 for the presently preferred embodiment of the adhesive tape and process of making is hereinafter described.

Staple viscose-rayon textile fibers having a length in the range of 25.4 to 50.8 mm (1 to 2 inches), are formed into a continuous fluffy web by a garnett machine or the like, or by a "Rando-Webber" machine (sold by Curlator Corp., Rochester, N.Y., U.S.A.). A typical web is composed of $1\frac{1}{2}$ denier fibers of 31.75 mm length ($1\frac{1}{4}$ inch) adapted to provide a fiber weight in the finished fabric of about 40.77 kilograms to 54.36 kilograms per thousand square meters (75 to 100 pounds per thousand square yards). The nonbundled staple fibers are thereby randomly interlaced into a loose fluffy layer wherein the fibers cross over and under each other so as to be held together by mechanical and frictional forces.

This fluffy fiber web is then fed through the nip of a pair of horizontal squeeze rolls, the lower one of which dips in an aqueous bath of fiber-binding rubbery sizing latex. This results in the fluffy web being compacted to a tissue-like condition and being wetted and impregnated without excess by the sizing solution. The moving web is then dried by engagement with a series of rotating heated drying cylinders located below a forced-draft ventilating hood, thereby unifying the fabric by adhesive interbonding of the interlaced fibers at their crossing points by means of the dried sizing agent, which also imperceptibly coats the individual fibers without filling up the interstices or appreciably affecting the porosity of the product. The sizing also prevents fuzzing. This provides the porous backing upon which the adhesive is to be subsequently applied.

The preferred sizing agents for binding the fibers are water-dispersible rubbery acrylate polymer latices which dry on the fibers to be a nontacky state. These are well known in the textile industry. A suitable example is "Rhoplex B-15," sold by Rohm and Haas Co., an aqueous dispersion containing 45% acrylic polymer solids by weight, and which is diluted with water to provide a sizing, bath having a polymer solids concentration of about 28%. The concentration is adjusted so that the finished dried fabric will have a polymer sizing weight of 30-70% of the total fabric weight and preferably about equal to the fiber weight.

The presently preferred pressure-sensitive adhesive 14 is a pure rubbery copolymer of isooctyl acrylate and acrylic acid in 94:6 ratio; this type being described in Ulrich's U.S.A. Letters Patent RE 24906. The original solvent dispersion thereof is coated on a heated drum from which the dried polymer is removed and redispersed in a mixed solvent of heptane and isopropyl alcohol (70:30) to provide a 22% solution of coatable viscosity. This procedure eliminates volatile ingredients of the original polymer solution.

This adhesive solution is then coated on a moving liner having an insoluble, heat-resistant, shiny-smooth, antistick surface (such as a paper liner carrying a silicone resin release coating) in a wet coating weight adequate to provide a dry adhesive weight of about 81.5 kilograms per 1000 square meters (150 pounds per thousand square yards). This wet adhesive coated web is promptly drawn into and through a hot air heating oven so arranged that after initial drying of the adhesive to a semi-dry state, the above-described backing web is layed down on the adhesive and becomes adhesively laminated thereto. An air temperature of 37.8—65.6 degrees Celcius (100—150 degrees F.) is preferably employed. Too high a temperature will cause a spongy adhesive coating or make control difficult. The objective at this point is to partially dry adhesive to a degree that will prevent wicking through the superimposed porous backing fabric. Continuing through the drying oven, the laminated "sandwich" web is further heated to fully eliminate residual solvent and thereby complete the drying. In this example, satisfactory results have been obtained by passing the laminated web through successive oven sections adapted to heat it at 37.8 degrees Celsius (100 degrees F) for $2\frac{1}{2}$ minutes, then at 65.6 degrees Celsius (150 degrees F.) for $2\frac{1}{2}$ minutes, and finally at 93.3 degrees Celsius (200 degrees F.) for $1\frac{1}{2}$ minutes.

The resultant adhesive sheeting has a caliper thickness of 150 to 225 microns (6 to 9 mils).

The barrier coat 15 is typically a solvent-dispersible rubbery polymer which when dry on the backside of the adhesive/backing laminate forms a nontacky continuous film. A suitable example is "VAGH 1," supplied by Union Carbide Chemicals Co. which is a vinyl terpolymer composed of 92 parts vinyl chloride, 6 parts vinyl acetate and 2 parts vinyl alcohol which is dispersed in toluene and methyl iso-butyl ketone to a solids concentration of 15% by weight. The coating should comprise of between O.0649 and O.1947 grams per 154.8 square centimeters (1 and 3 grains per 24 square inches) of dry VAGH so as to continuously coat the backing over the fibers and adhesive which exists in the intersices of the porous backing leaving a nonporous, nontacky tape surface. The barrier coat 15 also increases the tensile strength of the tape strip 6 and reduces soiling of the strip.

Preferably, a low-adhesion backsizing 16 is then imparted to the barrier coated surface of the backing fabric. This backsize is so extemely thin as to be imperceptible. This low-adhesion backsizing results in a surface having a reduced adhesion to the tacky pressure-sensitive adhesive and permits linerless rolls of tape or pad arranged strips that can be separated with less effort than would be the case if this backsize were omitted. A preferred low-adhesion backsize 16 is a silicone such as "SYL-OFF" 294 supplied by Dow Corning Corp.

After drying of the backsizing 16 the liner-mounted adhesive-coated web is wound into large jumbo rolls, and is ready for subsequent conversion into tape rolls or strips of desired width or length. The backing is of a nature that permits slitting of tape with straight non-ravelling edges.

The jumbo roll may be unwound and slit to the width of the finished tape rolls and the bands of paper and perforations are placed at appropriate locations and the tape is wound into short length rolls of e.g. 20 strips of tape 11. The bands of paper 26 are applied to define the strips 20. The cutting of the perforations affords a cutting of approximately sixty (60) percent of the width of each strip. The openings 23 can be punched during the perforating.

As an alternative to the use of bands of paper as a laminate to form readily identifiable tabs or handles, the adhesive 14 may be coated with glass beads, pigments or other materials to provide the adhesive detactifying and form the tabs or handles.

The strips of tape 11 are 1.27 to 2.54 centimeters (one-half to one inch wide) and 27.94 centimeters (11 inches) long when the strips of tape are used to bind sheets of paper together after the sheets of paper are offset or shingled to expose a narrow surface of each sheet along the edge to be bound. The strips 20 are 3.8 centimeters (1.5 inches) long, and when perforated to separate, they are perforated at the middle.

Detailed Description

In the embodiment of the invention illustrated in Figures 4-7, the strips 11 are packaged in a stack or pad.

In the drawing, a stack or pad, generally designated 30, of tape strips 11 and removable tabs 25 is illustrated. Each strip 11 has a backing generally designated 12, of preferably a unified nonwoven fibrous fabric carrying a continuous coating of the pressure-sensitive adhesive 14. The backing 12 is also coated with a barrier coating 15 on the surface opposite the adhesive coated surface to restrict migration or viscoelastic flow of the adhesive 14 to the opposite surface of the tape. The barrier coating 15 is coated with a release coat or low-adhesion backsizing 16 to permit subsequent release and separation of one strip in the pad from the other when a tab is lifted to peel the tape strips 11 apart.

The tape strips 11 to form the pad 30 correspond to the construction described for the roll 10. The pads 30 may be made from a jumbo roll of tape product which is unwound and cut transversely into sheets with the length of web cut equalling the desired length for the strips. Strips of paper are then applied along the leading and trailing edge of each sheet with the paper strips overlapping the edges of the adhesive coated sheets by about 6 mm (0.25 inch). The sheets with the paper strips are then layed up in a slab on a support card 35 and the slabs are guillotined into pads of the desired width with each pad having a multiple of tape strips 11, e.g. 20 strips per pad, each with a tab 25 at each end. The strips are then perforated at the edge of the tabs 25 to afford a cutting of approximately sixty (60) percent of the width of the strip. Then at least one hole 23 is drilled in a tab 25, of approximately 6 mm (one quarter inch) in diameter, centrally thereof. The tape strips are 1.27 to 2.54 centimeters (one half to one inch) wide and have tape lengths of 27.94 centimeters (11 inches) when the coated tabs are used, or 29.21 centimeters (11½ inches) when the perforated tape and uncoated tabs are used for binding 27.94 centimeter (11 inch) paper. The tape for binding other sizes of paper. e.g., DIN size A-4, will have dimensions accordingly.

Alternatively the paper forming the tab material may have a surface coating or low-adhesion backsizing 36 (Figure 7) similar to that hereinabove described. The coated surface is then applied toward the adhesive 14. It is then not necessary to use as long a strip of tape as the tape should equal the length of the edges to be bound and the tabs 25 can be pulled readily from beneath the ends of the tape strip. In this configuration the strips 11 would not have the perforations 22.

After the slabs are cut into pads the opposite edges of the pads are treated with a tack eliminator such as sold under the tradename "TYZOR" TBT sold by Union Carbide Chemicals Co. The tack eliminator is a tertiary n-butyl titinate. Other tack eliminators are calcium carbonate, glass beads, or metal halides. This treatment of the edges of the pads causes a crosslinking of the adhesive on the edges to detackify the adhesive and reduces the migration of the adhesive from the edges of the pads and reduces soiling.

The tape construction described herein is such that, when the edges of the sheets being bound are offset to expose a narrow surface at least three times the thickness of the sheets, the tape strip can be pressed against the sheets and the fingers or other compliant article pressing on the tape will conform the tape to the shingled surface of the sheets. The adhesive will contact a majority of the exposed surface of the treads of the shingled sheets and is extensible and compliant sufficiently to conform about the corner of the risers and treads. Because of the deadness or inelasticity the tape will remain in contact with the treads of the individual sheets upon fanning or opening the bound sheets and the adhesive is not contacting and is therefore not forced to peel from the risers. The tape will fold at the riser-tread intersection.

The tape strip according to the present invention permits the bound pages to be opened after binding and the pages all lay flat as the tape backing affords a hinge for each sheet which is at the very edge of the pages and the fibers in the backing do not fatigue. The tape has sufficient drape to remain in position without placing the adhesive under a peel force and upon closing the bound document the tape need not be pressed against the pages again to maintain the pages bound in book form.

The present invention is adaptable for use with tapes suitable for uses other than binding sheets together. Suture strips or strips of tape used for other medical purposes, bandaging e.g., for packaging, box sealing etc. may be packaged in precut strips with adjacent separable tabs in accordance with the teachings of this invention.

**Claims**

1. A strip of binding tape comprising
a predetermined length of porous nonwoven fibrous backing of polymeric material, and
a coating of an acrylic pressure sensitive adhesive on one surface of the backing, characterized by the feature that a barrier layer is coated on the surface of the backing opposite the adhesive to cover the surface of the backing and interstices between the fibers to restrict adhesive migration through said backing and a tab is adhered to one end of said predetermined length of backing, said tab being separable from said predetermined length of backing.

2. A strip of binding tape according to claim 1 characterized in that said barrier layer is a polymer to seal the backing and make it nonporous and nontacky.

3. A strip of binding tape according to claim 1 characterized in that a low-adhesion backsize is placed on said barrier layer to permit winding and stacking of a plurality of said strips of predetermined length.

4. A pad of pressure-sensitive adhesive tape strips according to claim 3 positioned in a stack for use in binding sheets together, characterized in that each strip has a tab attached to each end thereof against a portion of the adhesive of said predetermined length of backing, at least one of said tabs being formed with an opening therein with the openings in the tabs being in aligned position.

5. A roll of pressure-sensitive adhesive tape strips according to claim 3 with said tape strips formed in a continuous roll by transversely extending perforations at the ends of said strips and characterized in that additional lengths of tape material are positioned between said strips in the roll to provide a short length of tape separating said strips of tape consecutively through the length of the roll to provide a predetermined number of said strips of tape of said predetermined length.

6. A concatenation of strips of tape according to claim 3 joined together by nonadhesive sections affording the unwinding of said strips from a roll without contact with the adhesive coated surface of said strips, said strips defining said tabs which are separable from said predetermined lengths of backing along weakened lines extending transversely in relationship to said strips.

7. A strip of binding tape according to claim 1, 4, 5 or 6 characterized in that said backing comprises a nonwoven web of viscose rayon 1½ denier fibers bound by a rubbery acrylate polymer.

8. A strip according to claim 1, 4, 5 or 6 characterized in that the sides of the coatings of adhesive are treated with a tack eliminator.

9. A strip of binding tape according to claim 5 or 6 or 7 characterized in that said predetermined lengths of backing have a length greater than the length of said tabs or nonadhesive sections.

## Patentansprüche

1. Bindebandstreifen mit
einer vorherbestimmten Länge eines porösen Trägers aus polymerem Faservliesstoff und
einem auf einer Oberfläche des Trägers vorgesehenen Überzug aus einem Acryl-Haftkleber, dadurch gekennzeichnet, daß auf der dem Kleber entgegengesetzten Oberfläche des Trägers eine Sperrschicht vorgesehen ist, die die Oberfläche des Trägers und Faserzwischenräume bedeckt, um ein Wandern von Klebstoff durch den Träger zu verhindern, und daß an dem einen Ende der vorherbestimmten Länge des Trägers ein Lappen angeklebt ist, der von der vorherbestimmten Länge des Trägers trennbar ist.

2. Bindebandstreifen nach Anspruch 1, dadurch gekennzeichnet, daß die Sperrschicht aus einem Polymer besteht, so daß sie den Rücken dicht verschließt und ihn nichtporös und nichtklebfähig macht.

3. Bindebandstreifen nach Anspruch 1, dadurch gekennzeichnet, daß sich auf der Sperrschicht eine nur schwach klebfähige Rückenappretur befindet, damit eine Mehrzahl von Streifen von vorherbestimmter Länge aufgewickelt und gestapelt werden können.

4. Aus Haftklebebandstreifen nach Anspruch 3 bestehende Lage, die zur Verwendung zum Zusammenbinden von Blättern in einem Stapel angeordnet ist, dadurch gekennzeichnet, daß an beiden Enden jedes Streifens ein Lappen angebracht ist, der an einem Teil des Klebstoffes der vorherbestimmten Länge des Trägers anliegt, daß mindestens einer der Lappen mit einer Öffnung ausgebildet ist und daß die Öffnungen in den Lappen miteinander fluchten.

5. Rolle aus Haftklebebandstreifen nach Anspruch 3, die dadurch zu einer endlosen Rolle vereinigt sind, daß an den Enden der Streifen quer angeordnete Perforationslinien vorgesehen sind, dadurch gekennzeichnet, daß zwischen den Streifen der Rolle zusätzliche Längen aus Bandmaterial angeordnet sind, die eine kurze Bandlänge bilden, die die Bandstreifen über die Länge der Rolle fortlaufend voneinander trennen, so daß eine vorherbestimmte Anzahl der genannten Streifen von vorherbestimmter Länge vorhanden sind.

6. Kette von Bandstreifen nach Anspruch 3, die miteinander durch nichtklebende Abschnitte verbunden sind, die ein Abwickeln der Streifen von einer Rolle ohne Berührung mit der Klebstoffüberzogenen Fläche der Streifen ermöglichen, wobei die die Lappen bildenden Streifen von den vorherbestimmten Längen des Trägers entlang von Schwächungslinien trennbar sind, die sich quer zu den Streifen erstrecken.

7. Bindebandstreifen nach Anspruch 1, 4, 5 oder 6, dadurch gekennzeichnet, daß der Rücken ein Faservlies aus Viskosereyonfasern von 1½ Denier aufweist, die mit einem gummiartigen Acrylatpolymer gebunden sind.

8. Streifen nach Anspruch 1, 4, 5 oder 6, dadurch gekennzeichnet, daß die Überzüge aus Klebstoff mit einem Anti-Blockmittel behandelt sind.

9. Bindebandstreifen nach Anspruch 5, dadurch gekennzeichnet, daß die vorherbestimmten Längen des Trägers länger sind als die Lappen oder nichtklebenden Abschnitte.

## Revendications

1. Bande de ruban de liaison comprenant
une longueur prédéterminée de support fibreux non-tissé poreux en polymère, et
un revêtement dun adhésif acrylique sensible à la pression sur une surface du support, caractérisée en ce qu'une couche barrière est appliquée sur la surface du support opposée à l'adhésif de manière à recouvrir la surface du support et les interstices entre les fibres pour empêcher la migration de l'adhésif à travers ledit support, et en ce qu'une languette est collée à une extrémité de ladite longueur prédéterminée de support, ladite languette étant séparable de ladite longueur prédéterminée de support.

2. Bande de ruban de liaison suivant la revendication 1, caractérisée en ce que ladite couche barrière est un polymère destiné à obturer le support et à le rendre non poreux et non collant.

3. Bande de ruban de liaison suivant la revendication 1, caractérisée en ce qu'un encollage de faible adhérence est placé sur ladite couche barrière pour permettre le bobinage et l'empilage d'une pluralité de dites bandes de longueur prédéterminée.

4. Bloc de bandes de ruban adhésif sensible à la pression suivant la revendication 3, disposées en une pile pour l'utilisation dans la reliure de feuilles, caractérisé en ce que chaque bande comporte une languette attachée à chaque extrémité contre une partie de l'adhésif de ladite longueur prédéterminée de support, au moins l'une des dites languettes comportant un trou, les trous des languettes étant en position alignée

5. Bobine de bandes de ruban adhésif sensible à la pression suivant la revendication 3, lesdites bandes de ruban étant formées en une bobine continue avec des perforations transversales aux extrémités desdites bandes, caractérisée en ce que des longueurs supplémentaires de ruban sont placées entre lesdites bandes dans la bobine, pour constituer un court tronçon de ruban séparant lesdites bandes de ruban consécutivement sur la longueur de la bobine de manière à fournir un nombre prédéterminé desdites bandes de ruban de ladite longueur prédéterminée.

6. Concaténation de bandes de ruban suivant la revendication 3, reliées les unes aux autres par des parties non adhésives permettant de dérouler lesdites bandes d'une bobine sans contact avec la surface revêtue d'adhésif desdites bandes, lesdites bandes définissant lesdites languettes qui sont séparables desdites longueurs prédéterminées de support le long de lignes d'affaiblissement s'étendant transversalement auxdites bandes.

FIG.1

FIG.2

FIG.3

FIG. 4

FIG. 5

FIG. 6

FIG. 7